# EUROPÄISCHE PATENTSCHRIFT

(11) **EP 3 861 598 B1**
(45) Veröffentlichungstag und Bekanntmachung des Hinweises auf die Patenterteilung: **09.09.2026**
(21) Anmeldenummer: 19749622.7
(22) Anmeldetag: 25.07.2019
(51) Int. Cl.: H01Q 1/32, B61L 3/22, H04W 52/28, H01Q 13/22, H04W 4/40, H04W 52/24, H04W 52/52, H04W 4/02

(54) **KOMMUNIKATIONSSYSTEM**
COMMUNICATIONS SYSTEM
SYSTÈME DE COMMUNICATION

(30) Priorität: 09.07.2019 DE 102019118531
(43) Veröffentlichungstag der Anmeldung: 11.08.2021
(73) Patentinhaber: Conductix-Wampfler GmbH, 79576 Weil am Rhein (DE)
(72) Erfinder: WINTER, Nicholas, 79540 Lörrach (DE)
(74) Vertreter: Charrier Rapp & Liebau
(86) Internationale Anmeldenummer: PCT/EP2019/070007
(87) Internationale Veröffentlichungsnummer: WO 2021/004643

(56) Entgegenhaltungen:
- DE-B4- 102013 002 227
- BILL SCHWEBER: "RF Attenuators: For When You Have Too Much of a Good Thing", 10 September 2015 (2015-09-10), XP055676114, Retrieved from the Internet <URL:https://www.digikey.nl/en/articles/techzone/2015/sep/rf-attenuators-for-when-you-have-too-much-of-a-good-thing> [retrieved on 20200312]

## Beschreibung

Die Erfindung betrifft ein Kommunikationssystem nach dem Oberbegriff des Anspruchs 1.

Ein solches Kommunikationssystem ist beispielsweise aus der DE 10 2013 002 227 B4 bekannt. Es ermöglicht eine Kommunikation mit hoher Bandbreite und Störsicherheit zwischen einem entlang einer vorbestimmten Bewegungsbahn geführten Fahrzeug und einer ortsfesten Station. An einem Fahrzeug ist jeweils eine Antenne so angeordnet, dass sie durch einen Schlitz in den Hohlraum eines Hohlleiters hineinragt und elektromagnetische Wellen, die sich entlang des Hohlleiters ausbreiten, empfangen und/oder aussenden kann, während sich das Fahrzeug bewegt. An einem Ende des Hohlleiters ist eine entsprechende Antenne einer ortsfesten Station angeordnet.

Bei einem Kommunikationssystem dieser Art hängt die Leistung eines Empfangssignals wie bei jedem auf der Ausbreitung elektromagnetischer Wellen basierendem Kommunikationssystem von der Entfernung zwischen der Sendeantenne und der Empfangsantenne ab. Die Sendeleistung und die Länge der Fahrstrecke müssen so aneinander angepasst sein, dass einerseits bei maximal möglichem Abstand zwischen Sender und Empfänger noch ein für eine störsichere Nachrichtenübertragung ausreichender Signal-Rausch-Abstand gewährleistet ist und andererseits bei minimal möglichem Abstand zwischen Sender und Empfänger eine Übersteuerung des Empfängers durch eine zu hohe Leistung des Empfangssignals, die eine Störung der Nachrichtenübertragung oder gar eine Beschädigung des Empfängers verursachen kann, unterbleibt. Durch die letztgenannte Bedingung wird die maximale Sendeleistung und folglich durch die erstgenannte Bedingung die maximale Länge der Übertragungsstrecke begrenzt.

In der eingangs genannten Schrift sind die Sende- und Empfangseinrichtungen sowohl der ortsfesten Station, als auch der Fahrzeuge mit ihrer jeweiligen Antenne über ein Dämpfungsglied verbunden. Dämpfungsglieder sind an sich als Komponenten der Nachrichtentechnik bekannt und in verschiedenen Ausführungsformen mit fester oder variabler Dämpfung auf dem Markt erhältlich, wie aus dem Übersichtsartikel von Bill Schweber "RF Attenuators: For When You Have Too Much of a Good Thing" in dem Magazin "Electronic Products" hervorgeht. Ein Signal durchläuft bei dem eingangs genannten Kommunikationssystem auf dem Weg vom Sender zum Empfänger stets zwei Dämpfungsglieder, nämlich eines zwischen Sender und Sendeantenne und eines zwischen Empfangsantenne und Empfänger. Durch die Auslegung dieser Dämpfungsglieder kann bei gegebener Ausgangsleistung eines Senders und Eingangsempfindlichkeit eines Empfängers eine Pegelanpassung für einen weitgehend störungsfreien Betrieb vorgenommen werden. Die vorausgehend erläuterte Begrenzung der maximalen Länge der Übertragungsstrecke bleibt jedoch auch bei diesem Konzept gegeben.

In Anbetracht dieses Standes der Technik liegt der Erfindung die Aufgabe zugrunde, die maximale Länge der Übertragungsstrecke zu vergrößern.

Diese Aufgabe wird erfindungsgemäß durch ein Kommunikationssystem mit den Merkmalen des Anspruchs 1 gelöst. Vorteilhafte Ausgestaltungen sind in den jeweiligen Unteransprüchen angegeben.

Erfindungsgemäß ist bei einem Kommunikationssystem zur Kommunikation zwischen einem entlang einer vorbestimmten Bewegungsbahn geführten Fahrzeug und einer ortsfesten Station unter Verwendung eines sich parallel zu der Bewegungsbahn des Fahrzeugs erstreckenden Schlitzhohlleiters, in den mindestens eine mit einer Sende- und Empfangseinrichtung des Fahrzeugs verbundene Antenne und mindestens eine mit einer Sende- und Empfangseinrichtung der ortsfesten Station verbundene Antenne hineinragen, wobei die Antenne des Fahrzeugs während der Bewegung des Fahrzeugs in Längsrichtung des Schlitzes bewegt wird, zwischen die Antenne des Fahrzeugs und eine Sende- und Empfangseinrichtung des Fahrzeugs eine Dämpfungseinheit mit einstellbarer Dämpfung geschaltet und in der Dämpfungseinheit ist eine Schalteinrichtung vorgesehen, mittels derer die Antenne des Fahrzeugs wahlweise direkt oder über mindestens ein zwischengeschaltetes Dämpfungsglied mit der Sende- und Empfangseinrichtung des Fahrzeugs verbindbar ist.

Hierdurch kann die Reichweite der Kommunikation erhöht werden, indem die Sendeleistung der Sender erhöht wird und eine Übersteuerung der Empfänger durch die Dämpfungseinheit verhindert wird, wenn die von den Antennen empfangene Signalleistung bei einer Annäherung des Fahrzeugs an die ortsfeste Station aufgrund der erhöhten Sendeleistung übermäßig ansteigen würde. Eine Schalteinrichtung der genannten Art ermöglicht eine einfache Realisierung einer Dämpfungseinheit. Sie erlaubt eine stufenweise Änderung der Dämpfung, mit der bei entsprechender Anzahl von Stufen eine ausreichende Genauigkeit der Dämpfungseinstellung erzielbar ist.

Die Dämpfungseinheit weist zweckmäßigerweise eine analoge oder digitale Schnittstelle auf, über welche ihre Dämpfung mittels eines ihr an der Schnittstelle zugeführten Steuersignals einstellbar ist. Die Anpassung der Dämpfung kann in diesem Fall fahrzeugseitig und somit dezentral vorgenommen werden und erfordert keine Übertragung zusätzlicher Steuersignale über den Schlitzhohlleiter.

Besonders vorteilhaft ist es, dass die Dämpfungseinheit mit einem Dämpfungsregler verbunden ist, welchem von der Sende- und Empfangseinrichtung des Fahrzeugs ein die Leistung des empfangenen Signals anzeigendes Signal zuführbar ist, und der Dämpfungsregler dazu eingerichtet ist, die Dämpfung der Dämpfungseinheit in Abhängigkeit von der Leistung des empfangenen Signals einzustellen. Diese Leistung ist das unmittelbare Kriterium, welches eine Variation der Dämpfung erforderlich macht, weil sie unterhalb einer gewissen Entfernung zwischen Sender und Empfänger für den Empfänger zu groß wäre.

Die Dämpfungseinheit kann auch mit einem Dämpfungsregler verbunden sein, welchem von einer Steuereinrichtung des Fahrzeugs ein die Position des Fahrzeugs anzeigendes Signal zuführbar ist, und der Dämpfungsregler kann dazu eingerichtet sein, die Dämpfung der Dämpfungseinheit dann in Abhängigkeit von der Position des Fahrzeugs einzustellen. Die Position des Fahrzeugs und somit die Länge der Übertragungsstrecke kann entweder alternativ zur Leistung des empfangenen Signals als Kriterium für die Einstellung der Dämpfung verwendet werden, da die Signalleistung mit zunehmender Länge der Übertragungsstrecke in definierter Weise abnimmt, oder die beiden Kriterien können beispielsweise im Rahmen einer Plausibilitätsprüfung miteinander kombiniert werden.

Eine zweckmäßige Realisierung einer Dämpfungseinheit besteht in einem Dämpfungsglied mit kontinuierlich variabler Dämpfung, deren Wert durch ein analoges Signal einstellbar ist, wobei eine Schnittstelle der Dämpfungseinheit dazu eingerichtet ist, das analoge Signal von dem ihr zugeführten Steuersignal abzuleiten. Der Vorteil dieser Realisierung besteht darin, dass durch die kontinuierliche Variation der Dämpfung deren Wert stets optimal eingestellt werden kann.

Die Schalteinrichtung, mittels derer die Antenne des Fahrzeugs wahlweise direkt oder über mindestens ein zwischengeschaltetes Dämpfungsglied mit der Sende- und Empfangseinrichtung des Fahrzeugs verbindbar ist, ist zweckmäßigerweise über eine Schnittstelle der Dämpfungseinheit durch einen Dämpfungsregler des Fahrzeugs betätigbar. Eine Möglichkeit zur stufenweisen Variation der Dämpfung besteht darin, dass mindestens zwei Dämpfungsglieder unterschiedlicher Dämpfung vorgesehen sind, und dass die Antenne durch die Schalteinrichtung des Fahrzeugs wahlweise direkt oder über eines der Dämpfungsglieder mit der Sende- und Empfangseinrichtung des Fahrzeugs verbindbar ist. Eine andere Möglichkeit zur stufenweisen Variation der Dämpfung besteht darin, dass mindestens zwei Dämpfungsglieder vorgesehen sind, und dass die Antenne durch die Schalteinrichtung wahlweise direkt oder über eines der Dämpfungsglieder oder über eine Reihenschaltung mehrerer Dämpfungsglieder mit der Sende- und Empfangseinrichtung des Fahrzeugs verbindbar ist.

An dem Fahrzeug können auch zwei Antennen in Fahrtrichtung hintereinander in einem vorbestimmten Abstand zueinander angeordnet sein. Die Sende- und Empfangseinrichtung des Fahrzeugs weist in diesem Fall zwei Anschlüsse für Antennen auf und zwischen jeder Antenne des Fahrzeugs und der Sende- und Empfangseinrichtung des Fahrzeugs ist jeweils eine Dämpfungseinheit mit einstellbarer Dämpfung geschaltet. Eine solche Anordnung ist von Vorteil bei einem Kommunikationssystem, das für ein Transportsystem großer Länge eine Übertragungsstrecke großer Länge bereitstellen soll. In diesem Fall besteht der Schlitzhohlleiter aus mehreren Abschnitten, zwischen denen jeweils eine Lücke vorgesehen ist, die bei Verwendung nur einer einzigen Antenne zu einer Unterbrechung der Kommunikation führen würde, wenn sich die Antenne in ihrem Bereich bewegt. Durch die Verwendung zweier Antennen hintereinander, die jeweils mit einem zuschaltbaren Dämpfungsglied ausgestattet sind, kann eine Unterbrechung der Kommunikation an einer solchen Lücke vermieden werden.

Vorteilhafterweise sind die Dämpfungseinheiten in diesem Fall mit einem Dämpfungsregler mit mehreren Ausgängen verbunden, durch welchen ihre Dämpfungen unabhängig voneinander einstellbar sind. Hierzu ist dem Dämpfungsregler von der Sende- und Empfangseinrichtung des Fahrzeugs ein die Leistung der empfangenen Signale anzeigendes Signal zuführbar und der Dämpfungsregler ist dazu eingerichtet, die Dämpfungen der Dämpfungseinheiten in Abhängigkeit von der Leistung der empfangenen Signale einzustellen, oder dem Dämpfungsregler ist von einer Steuereinrichtung des Fahrzeugs ein die Position des Fahrzeugs anzeigendes Signal zuführbar und der Dämpfungsregler ist dazu eingerichtet, die Dämpfungen der Dämpfungseinheiten in Abhängigkeit von der Position des Fahrzeugs einzustellen. Auch hier ist eine Kombination beider Kriterien, beispielsweise zum Zweck einer Plausibilitätsprüfung möglich.

Nachfolgend werden Ausführungsbeispiele der Erfindung anhand der Zeichnungen beschrieben. In diesen zeigt
- Fig. 1: eine schematische Querschnittsansicht eines Schlitzhohlleiters mit einer in ihn hineinragenden Antenne,
- Fig. 2: eine schematische Längsschnittansicht eines Schlitzhohlleiters in Richtung der Pfeile A-A in Fig. 1 mit einem Blockschaltbild der weiteren Komponenten des erfindungsgemäßen Kommunikationssystems,
- Fig. 3: ein Blockschaltbild einer ersten Ausführungsform der fahrzeugseitigen Komponenten des erfindungsgemäßen Kommunikationssystems von Fig. 2,
- Fig. 4: ein Blockschaltbild einer zweiten Ausführungsform der fahrzeugseitigen Komponenten des erfindungsgemäßen Kommunikationssystems von Fig. 2,
- Fig. 5: ein Blockschaltbild einer dritten Ausführungsform der fahrzeugseitigen Komponenten des erfindungsgemäßen Kommunikationssystems von Fig. 2 und
- Fig. 6: eine Fig. 2 entsprechende Ansicht einer zweiten Ausführungsform des erfindungsgemäßen Kommunikationssystems.

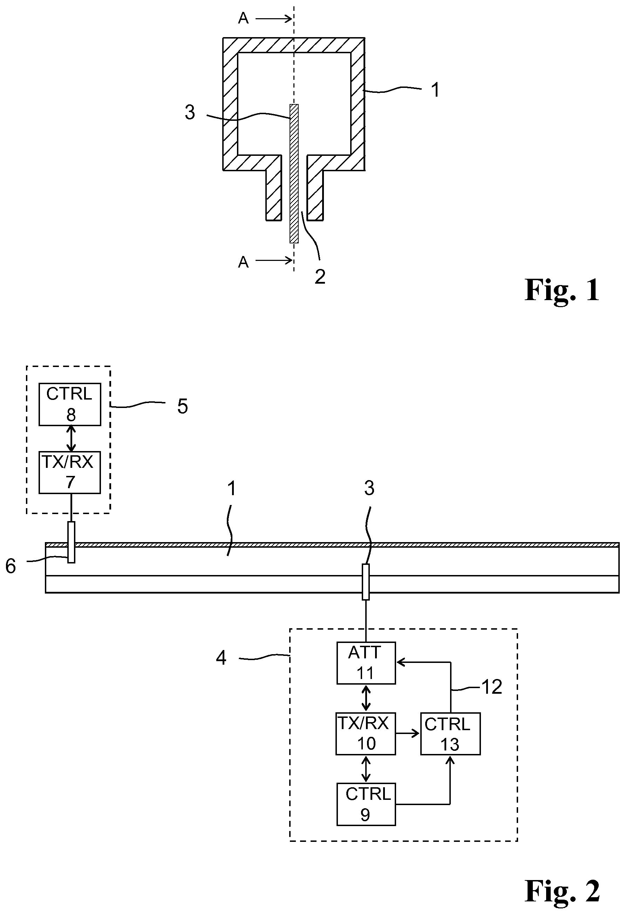

Fig. 1 zeigt eine schematische Querschnittsansicht eines Schlitzhohlleiters 1, wie er in einem Kommunikationssystem zur Kommunikation zwischen einem entlang einer vorbestimmten Bewegungsbahn geführten Fahrzeug 4 und einer ortsfesten Station 5 und/oder zwischen mehreren solchen Fahrzeugen untereinander im Stand der Technik verwendet wird. Durch den Schlitz 2 ragt eine Antenne 3 eines Fahrzeugs in den Schlitzhohlleiter 1 hinein, um elektromagnetische Wellen, die sich längs des Schlitzhohlleiters 1 ausbreiten, abzustrahlen und zu empfangen. Wenn sich das Fahrzeug entlang seiner vorbestimmten Bewegungsbahn bewegt, dann bewegt sich die Antenne 3 zusammen mit diesem in Längsrichtung des Schlitzhohlleiters 1. Das Fahrzeug 4 kann insbesondere durch Schienen entlang einer vorgesehenen Fahrstrecke geführt sein.

Wie Fig. 2 zeigt, ragt eine Antenne 6 der ortsfesten Station 5 ebenfalls in den Schlitzhohlleiter 1 hinein. Sie ist mit einer Sende- und Empfangseinrichtung 7, nachfolgend Transceiver 7 genannt, verbunden. Die Antenne 6 der ortsfesten Station 5 könnte auch wie die Antenne 3 des Fahrzeugs 4 durch den Schlitz 2 in den Schlitzhohlleiter 1 hineinragen, muss es aber nicht, da sie nicht bewegbar sein muss. Der Transceiver 7 ist mit einer Steuereinrichtung 8 der ortsfesten Station 5 verbunden, die das gesamte Transportsystem, welches auch mehrere Fahrzeuge 4 beinhalten kann, steuert und/oder seinen Betrieb beispielsweise anhand von Videosignalen und Statusmeldungen überwacht. Die Steuereinrichtung 8 kann eine steuernde Funktion ausüben, muss es aber nicht, sondern kann auch ausschließlich dem Zweck der Überwachung des Betriebs dienen. Zu diesem Zweck findet eine ständige bidirektionale Datenkommunikation zwischen der Steuereinrichtung 8 der ortsfesten Station 5 und einer Steuereinrichtung 9 des Fahrzeugs 4, welche die Bewegung des Fahrzeugs 4 steuert, über den Schlitzhohlleiter 1 als Übertragungskanal statt.

Wie Fig. 2 weiterhin zeigt, ist die Steuereinrichtung 9 des Fahrzeugs 4 hierzu mit einer Sende- und Empfangseinrichtung 10, nachfolgend Transceiver 10 genannt, an Bord des Fahrzeugs 4 verbunden. Dieser Transceiver 10 ist mit der Antenne 3 des Fahrzeugs 4 über eine Dämpfungseinheit 11 verbunden. Die Dämpfungseinheit 11 ist reziprok, d.h. sie dämpft ein Signal in beiden möglichen Durchgangsrichtungen vom Transceiver 10 zu der Antenne 3 des Fahrzeugs 4 und umgekehrt von der Antenne 3 zu dem Transceiver 10 in gleicher Weise. Die Dämpfung der Dämpfungseinheit 11 ist über eine Steuerleitung 12 einstellbar. An dieser ist ein Dämpfungsregler 13 angeschlossen, der mit dem Transceiver 10 und mit der Steuereinrichtung 9 verbunden ist. Die maximale Dämpfung der Dämpfungseinheit 11 ist so ausgelegt, dass bei minimal möglichem Abstand des Fahrzeugs 4 von der ortsfesten Station 5 dann, wenn die Dämpfungseinheit 11 auf ihre maximale Dämpfung eingestellt ist, weder der Eingang des Transceivers 10 des Fahrzeugs 4 übersteuert wird, wenn der Transceiver 7 der ortsfesten Station 5 sendet, noch der Eingang des Transceivers 7 der ortsfesten Station 5 übersteuert wird, wenn der Transceiver 10 des Fahrzeugs 4 sendet.

Wenn sich das Fahrzeug 4 von der ortsfesten Station 5 entfernt, nimmt bei konstanter Sendeleistung der Transceiver 7 und 10 der Pegel der von den Antennen 3 und 6 empfangbaren Signale ab und erreicht bei einer bestimmten Entfernung einen Wert, bei dem der Signal-Rausch-Abstand am Empfangseingang zumindest eines der beiden Transceiver 7 und 10 für eine störungsfreie Nachrichtenübertragung zu gering wird. Noch bevor dieser Fall eintritt, verstellt der Dämpfungsregler 13 des Fahrzeugs 4 die Dämpfung der Dämpfungseinheit 11 rechtzeitig auf einen geringeren Wert, wodurch sich die von jedem der beiden Transceiver 7 und 10 empfangbare Signalleistung so weit erhöht, dass die dadurch bewirkte Erhöhung des Signal-Rausch-Abstandes am jeweiligen Empfangseingang beider Transceiver 7 und 10 weiterhin eine weitgehend störungsfreie Nachrichtenübertragung ermöglicht.

Die maximale Entfernung, über welche das Fahrzeug 4 mit der ortsfesten Station 5 kommunizieren kann wird durch die erfindungsgemäße Möglichkeit, die Dämpfung zwischen der Antenne 3 und dem Transceiver 11 des Fahrzeugs 4 entfernungsabhängig durch eine gezielte Einstellung der Dämpfung der Dämpfungseinheit 11 zu variieren, im Vergleich zu einer Konfiguration ohne Dämpfungseinheit 11 oder einer Konfiguration mit einem in den Signalpfad zwischen der Antenne 3 und dem Transceiver 10 geschalteten Dämpfungsglied mit festem Dämpfungswert deutlich erweitert.

Die entfernungsabhängige Einstellung der Dämpfung der Dämpfungseinheit 11 erfolgt vorzugsweise anhand einer Messung des Signalpegels am Empfangseingang des Transceivers 10, da der Signalpegel das unmittelbare Kriterium für die Notwendigkeit einer Änderung der Dämpfung darstellt. Dieser Signalpegel wird dem Dämpfungsregler 13 von dem Transceiver 10 fortlaufend gemeldet. Anhand dieser Information stellt der Dämpfungsregler 13 die Dämpfung der Dämpfungseinheit 11 mittels der Steuerleitung 12 auf den jeweils optimalen Wert ein.

Als Kriterium für eine Änderung der Dämpfung der Dämpfungseinheit 11 kann aber auch die Entfernung zwischen dem Fahrzeug 4 und der ortsfesten Station 5 herangezogen werden. So ist bei einem Transportsystem der Art, als dessen Bestandteil ein erfindungsgemäßes Kommunikationssystem konzipiert ist, die Anordnung von optischen Markierungen entlang des Fahrweges üblich, anhand derer die Steuereinrichtung 9 eines Fahrzeugs 4 dessen Position entlang des Fahrweges und damit auch den Abstand der fahrzeugseitigen Antenne 3 von der Antenne 6 der ortsfesten Station 5 mittels optischer Sensoren bestimmen kann.

Diese Information kann entweder alternativ oder zusätzlich zum aktuellen Pegel des am Antenneneingang des Transceivers 10 ankommenden Signals durch den Dämpfungsregler 13 für die Entscheidung über eine Änderung der Dämpfung der Dämpfungseinheit 11 herangezogen werden. Hierzu ist der Dämpfungsregler 13 mit der Steuereinrichtung 9 des Fahrzeugs 4 verbunden. Grundsätzlich würde auch nur eine der beiden Informationen Empfangssignalpegel oder Fahrzeugposition als Kriterium für die Einstellung der Dämpfung ausreichen.

Die Sendeleistung der Transceiver 7 und 10 wird stets entsprechend der maximal erforderlichen Reichweite des Kommunikationssystems gewählt. Wenn sich das Fahrzeug 4 in maximaler Entfernung von der ortsfesten Station 5 befindet, ist die Dämpfung der Dämpfungseinheit 11 auf ihren minimal möglichen Wert eingestellt. Bei einer Bewegung des Fahrzeugs 4 aus einer solchen Position in Richtung der ortsfesten Station 5, die ein entsprechendes Ansteigen der Leistung der von den Transceivern 7 und 10 empfangenen Signale zur Folge hat, wird die Dämpfung der Dämpfungseinheit 11 durch den Dämpfungsregler 13 über die Steuerleitung 12 immer weiter erhöht, wodurch die Signalleistung an den Empfangseingängen der Transceiver 7 und 10 bis hin zum Erreichen des minimal möglichen Abstandes des Fahrzeugs 4 von der ortsfesten Station 5 stets im zulässigen Bereich gehalten wird.

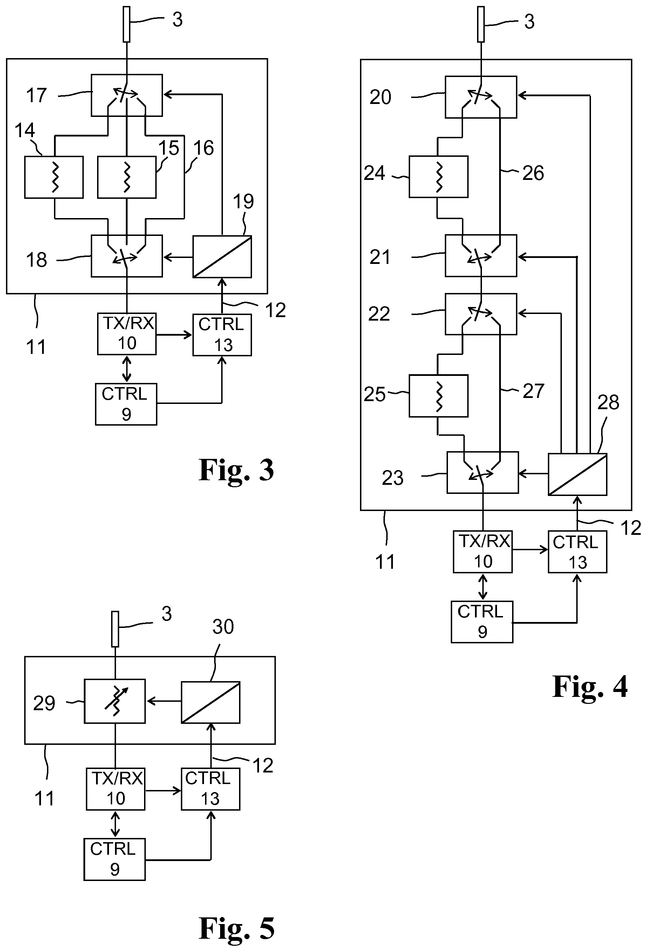

Eine erste Ausführungsform des fahrzeugseitigen Teils einer erfindungsgemäßen Kommunikationseinrichtung mit einer einstellbaren Dämpfungseinheit 11 zeigt Fig. 3. Diese Dämpfungseinheit 11 besteht aus zwei Dämpfungsgliedern 14 und 15 mit verschieden großer fester Dämpfung, einer kurzen Leitung 16 mit sehr geringer Dämpfung , zwei Schaltern 17 und 18 und einer Schnittstelle 19. Mittels der Schalter 17 und 18 ist jeweils ein Anschluss, an dem bei dem Schalter 17 die Antenne 3 und an dem Schalter 18 der Transceiver 10 angeschlossen ist, wahlweise mit einem von drei anderen Anschlüssen verbindbar. An jedem dieser beiden Schalter 17 und 18 ist jeweils an den ersten dieser drei anderen Anschlüsse das erste Dämpfungsglied 14, an den zweiten dieser drei anderen Anschlüsse das zweite Dämpfungsglied 15 und an den dritten dieser drei anderen Anschlüsse die kurze Leitung 16 angeschlossen.

Die von dem Dämpfungsregler 13 zu der Dämpfungseinheit 11 führende Steuerleitung 12 ist an die Schnittstelle 19 angeschlossen, die aus einem über die Steuerleitung 12 zugeführten digitalen Steuersignal interne Steuersignale zur Ansteuerung der Schalter 17 und 18 ableitet, mit denen sie über jeweilige Steuerleitungen verbunden ist. Durch die Wahl der Schalterstellungen der Schalter 17 und 18 mittels des über die Steuerleitung 12 zugeführten Steuersignals kann der Dämpfungsregler 13 des Fahrzeugs 4 die Antenne 3 mit dem Transceiver 10 wahlweise über eines der zwei Dämpfungsglieder 14 oder 15 oder direkt über die Leitung 16 verbinden lassen. Durch die unterschiedliche Dämpfung der Dämpfungsglieder 14 und 15 besteht die Möglichkeit, die Dämpfung zwischen zwei verschiedenen Werten zu variieren, wenn eines der Dämpfungsglieder 14 oder 15 in den Signalpfad zwischen der Antenne 3 und dem Transceiver 10 geschaltet ist. Es versteht sich, dass auch Schalter mit mehr als drei Anschlüssen auf einer Seite und mehr als zwei Dämpfungsglieder mit verschiedenen Dämpfungswerten verwendet werden können, um eine noch feinere Abstufung der Dämpfung in Abhängigkeit von der Entfernung zwischen dem Fahrzeug 4 und der ortsfesten Station 5 zu realisieren.

Eine zweite Ausführungsform des fahrzeugseitigen Teils einer erfindungsgemäßen Kommunikationseinrichtung mit einer einstellbaren Dämpfungseinheit 11 zeigt Fig. 4. Durch vier Schalter 20, 21, 22 und 23 können bei dieser Ausführungsform zwei Dämpfungsglieder 24 und 25 mit jeweils fester Dämpfung wahlweise einzeln oder in Reihe zwischen die Antenne 3 und den Transceiver 10 des Fahrzeugs 4 geschaltet werden. An die Antenne 3 sind über einen ersten Schalter 20 ein erstes Dämpfungsglied 24 und eine erste kurze Leitung 26 genau wie bei der ersten Ausführungsform von Fig. 2 angeschlossen. An den Transceiver 10 sind über einen zweiten Schalter 23 ein zweites Dämpfungsglied 25 und eine zweite kurze Leitung 27 gleicher Art ebenfalls genau wie bei der ersten Ausführungsform von Fig. 2 angeschlossen. Zwischen die Dämpfungsglieder 24 und 25 und die Leitungen 26 und 27 sind zwei Schalter 21 und 22 in Reihe geschaltet, durch die das erste Dämpfungsglied 24 in Reihe mit entweder dem zweiten Dämpfungsglied 25 oder der zweiten Leitung 27 geschaltet werden kann oder die erste Leitung 26 in Reihe mit entweder dem zweiten Dämpfungsglied 25 oder der zweiten Leitung 27 geschaltet werden kann.

Somit kann durch die Wahl der Stellungen der vier Schalter 20, 21, 22 und 23 die Antenne 3 mit dem Transceiver 10 entweder direkt, d.h. über die zwei Leitungen 26 und 27 oder über die erste Leitung 26 und das zweite Dämpfungsglied 25 oder über das erste Dämpfungsglied 24 und die zweite Leitung 27 oder über die Reihenschaltung beider Dämpfungsglieder 24 und 25 verbunden werden. Wenn die Dämpfungsglieder 24 und 25 unterschiedliche Dämpfungswerte haben, kann die Dämpfung somit in drei Stufen variiert werden, wenn eines oder beide der Dämpfungsglieder 24 oder 25 in den Signalpfad zwischen der Antenne 3 und dem Transceiver 10 geschaltet ist bzw. sind. Es versteht sich, dass auch mehr als zwei Kombinationen aus jeweils einem Dämpfungsglied und einer Leitung über Schalter in Reihe geschaltet werden können, um eine noch feinere Abstufung der Dämpfung in Abhängigkeit von der Entfernung zwischen dem Fahrzeug 4 und einer ortsfesten Station 5 zu realisieren.

Auch hier werden die Schalter 20 bis 23 über Steuerleitungen von einer Schnittstelle 28 angesteuert, an deren Eingang die Steuerleitung 12 angeschlossen ist, über welche die Dämpfungseinheit 11 mit dem Dämpfungsregler 13 des Fahrzeugs 4 verbunden ist.

Eine dritte Ausführungsform des fahrzeugseitigen Teils einer erfindungsgemäßen Kommunikationseinrichtung mit einer einstellbaren Dämpfungseinheit 11 zeigt Fig. 5. Bei dieser Ausführungsform ist ein Dämpfungsglied 29 mit kontinuierlich variierbarer Dämpfung vorgesehen. Dieses Dämpfungsglied 29 enthält einen elektrisch einstellbaren ohmschen Widerstand in Form einer Diode, dessen Wert durch Anlegen einer Gleichspannung veränderbar ist. Von dem zu dämpfenden hochfrequenten Nachrichtensignal kann die Gleichspannung in einfacher Weise durch Filterung getrennt werden. Die Schnittstelle 30 der Dämpfungseinheit 11 erzeugt aus dem ihr von dem Dämpfungsregler 13 über die Steuerleitung 12 zugeführten Signal die Gleichspannung zur Verstellung der Dämpfung des variablen Dämpfungsgliedes 29.

Es ist auch möglich, die vorausgehend aufgezeigten Ausführungsformen einer variablen Dämpfungseinheit 11 miteinander zu kombinieren. So können sowohl durch Schalter variierbare Reihen- und Parallelschaltungen von Dämpfungsgliedern miteinander kombiniert werden, als auch innerhalb einer durch Schalter variierbaren Reihen- und/oder Parallelschaltung Dämpfungsglieder mit kontinuierlich variierbarer Dämpfung verwendet werden, um sowohl eine große Variation der Dämpfung, als auch eine genaue Einstellung eines gewünschten Dämpfungswertes zu ermöglichen.

Die Steuerleitung 12 kann bei allen Ausführungsformen eine einfache Zweidrahtleitung sein, an welche der Dämpfungsregler 13 ein Analogsignal in Form einer variablen Spannung anlegt, deren Betrag proportional zum Wert der einzustellenden Dämpfung ist. Es kann sich aber auch um eine mehradrige Steuerleitung 12 handeln, über die ein digitales Signal übertragen wird, in welchem der Wert der einzustellenden Dämpfung codiert ist. In diesem Fall haben die Schnittstellen 19 und 28 die Funktion eines Decoders und die Schnittstelle 30 die Funktion eines Digital-Analog-Wandlers. Es wäre auch möglich, bei einer Ausführungsform mit schaltbaren Dämpfungsgliedern zur Einstellung der Dämpfung eine Analogspannung zu verwenden, die von den Schnittstellen 19 und 20 anhand von Schwellwertvergleichen in Steuersignale für Schalter umgewandelt wird. Eine weitere Alternative für die Realisierung der Steuerleitung 12 ist eine Datenleitung zur seriellen Datenübertragung. In diesem Fall können die Schnittstellen 19, 28 und 30 beispielsweise eine USB-, Ethernet- oder RS485-Schnittstelle enthalten und der Dämpfungsregler 13 ist dann ebenfalls mit einer solchen ausgerüstet.

Bei den in den Figuren 3 und 4 gezeigten Schaltern handelt es sich vorzugsweise nicht um mechanische, sondern um elektronische Schalter in Form von Halbleiterbauelementen, insbesondere Transistoren. Die verschiedenen Komponenten der Dämpfungseinheit 11 können auf einem gemeinsamen Substrat angeordnet und durch Leiterbahnen miteinander verbunden sein. Bei diesem gemeinsamen Substrat kann es sich auch um einen Siliziumchip handeln, auf dem alle Komponenten mit dem Mitteln der Halbleitertechnologie integriert sind.

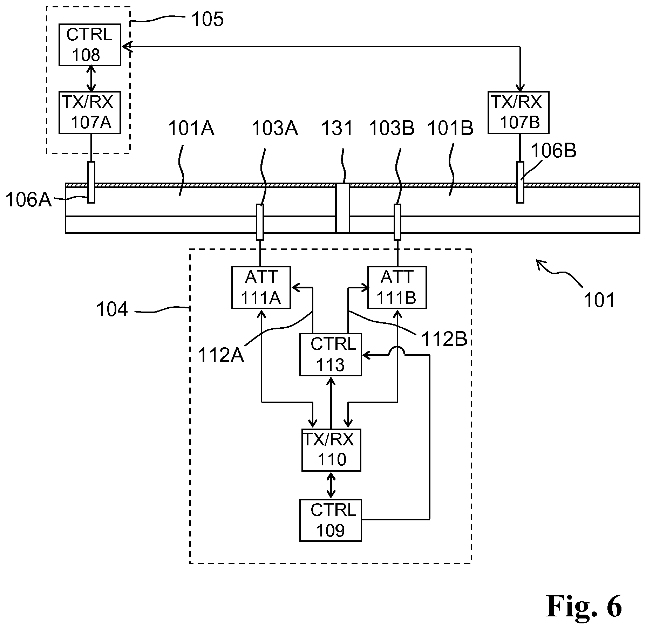

Eine zweite Ausführungsform eines erfindungsgemäßen Kommunikationssystems zeigt Fig. 6. Bei dieser sind im Unterschied zu der Ausführungsform von Fig. 2 an dem Fahrzeug 104 zwei Dämpfungseinheiten 111A und 111B mit unabhängig voneinander einstellbarer Dämpfung und zwei Antennen 103A und 103B vorgesehen. Die beiden Dämpfungseinheiten 111A und 111B sind von der gleichen Art wie die Dämpfungseinheit 11 der ersten Ausführungsform, die vorausgehend anhand der Figuren 3 bis 5 beschrieben wurde. Sie werden im Regelfall auf die gleiche Dämpfung eingestellt. Der Transceiver 110 des Fahrzeugs 104 hat zwei verschiedene Antennenanschlüsse, an die jeweils eine Antenne 103A bzw. 103B über eine zwischengeschaltete Dämpfungseinheit 111A bzw. 111B angeschlossen ist. Dementsprechend gehen von dem Dämpfungsregler 113 des Fahrzeugs 104 zwei Steuerleitungen 112A und 112B aus, nämlich je eine zu jeder der einstellbaren Dämpfungseinheiten 111A und 111B. Wie bei der ersten Ausführungsform sind auch hier der Transceiver 110 und der Dämpfungsregler 113 mit der Steuereinrichtung 109 des Fahrzeugs 104 verbunden.

Die zweite Ausführungsform ist für Transportsysteme großer Länge vorgesehen, die es erfordert, dass der Schlitzhohlleiter 101 aus mindestens zwei verschiedenen, durch eine Lücke 131 getrennten Abschnitten 101A und 101B besteht, wobei in dem in Fig. 5 gezeigten Beispiel zwei separate ortsfeste Transceiver 107A und 107B mit jeweils eigener Antenne 106A und 106B vorgesehen sind, die jeweils einem der verschiedenen Abschnitte 101A bzw. 101B des Schlitzhohlleiters 101 zugeordnet sind und mit einer gemeinsamen Steuereinrichtung 108 der ortsfesten Station 105 verbunden sind.

Eine Lücke 131 kann aber auch dann erforderlich sein, wenn zwar eine ausreichende Reichweite der Kommunikation mit nur einem einzigen ortsfesten Transceiver 107A und einer einzigen Antenne 106A gewährleistet ist, jedoch aufgrund der Länge der Abschnitte 101A und 101B ein Spielraum für eine thermische Längenänderung derselben benötigt wird. In diesem Fall sind an den einander zugewandten Enden der verschiedenen Abschnitte 101A bzw. 101B des Schlitzhohlleiters 101 an der Lücke 130 Antennen angeordnet, die durch ein flexibles Leiterstück verbunden sind. Durch diese Anordnung passiver Elemente erfolgt eine Signalübertragung zwischen den verschiedenen Abschnitten 101A bzw. 101B des Schlitzhohlleiters 101. Der zusätzliche Transceiver 107B sowie die zusätzliche Antenne 106B entfallen bei dieser Konfiguration.

Die beiden Antennen 103A und 103B des Fahrzeugs 104 sind in dessen Fahrtrichtung soweit gegeneinander versetzt, dass an einer Lücke 131 zwischen zwei Abschnitten 101 und 101B des Schlitzhohlleiters 101 stets eine Antenne 103A in den einen Abschnitt 101A und die andere Antenne 103B in den anderen Abschnitt 101B des Schlitzhohlleiters 101 hineinragt. Hierdurch wird eine Unterbrechung der Kommunikation vermieden, wenn das Fahrzeug 104 über eine Lücke 131 zwischen zwei verschiedenen Abschnitten 101A und 101B des Schlitzhohlleiters 101 fährt. Die in den beiden Signalpfaden zwischen jeder der Antennen 103A und 103B des Fahrzeugs 104 und dem jeweils zugeordneten Anschluss des Transceivers 110 vorgesehenen Dämpfungseinheiten 111A und 111B sind jeweils identisch. Die Signalpfade sind voneinander unabhängig und bei Bedarf auch auf verschiedene Dämpfungswerte einstellbar. Letzteres könnte von Interesse sein, falls eine Lücke 131 zwischen zwei verschiedenen Abschnitten 101A und 101B verschieden weit von den beiden ortsfesten Antennen 106A und 106B entfernt sein sollte.

Da die Position jeder Lücke 131 bekannt ist, kann die Steuereinrichtung 109 des Fahrzeugs 104 während einer Fahrt bei einer Annäherung an eine Lücke 131, die beispielsweise anhand einer Abtastung von entlang des Fahrweges angeordneten Markierungen mittels optischer Sensoren feststellbar ist, bei Bedarf rechtzeitig ein Steuersignal an den Dämpfungsregler 113 abgeben, der auf den Empfang dieses Steuersignals hin die Dämpfung des zweiten Signalpfades auf einen geeigneten Wert einstellt. Die Kommunikation kann dann zum richtigen Zeitpunkt auf den zweiten Signalpfad umgeschaltet werden. Es versteht sich, dass die zweite Ausführungsform der Erfindung nicht auf die Verwendung bei einem aus zwei Abschnitten 101A und 101B bestehenden Schlitzhohlleiter 101 beschränkt ist, sondern bei aus beliebig vielen Abschnitten zusammengesetzten Schlitzhohlleitern verwendbar ist.

## Patentansprüche

1. Kommunikationssystem zur Kommunikation zwischen einem entlang einer vorbestimmten Bewegungsbahn geführten Fahrzeug (4; 104) und einer ortsfesten Station (5; 105) unter Verwendung eines sich parallel zu der Bewegungsbahn des Fahrzeugs (4; 104) erstreckenden Schlitzhohlleiters (1; 101), in den mindestens eine mit einer Sende- und Empfangseinrichtung (7; 107A, 107B) der ortsfesten Station (5; 105) verbundene Antenne (6; 106A, 106B) und mindestens eine Antenne (3; 103A, 103B) des Fahrzeugs (4; 104) hineinragen, wobei die Antenne (3; 103A, 103B) des Fahrzeugs (4; 104) bei einer Bewegung des Fahrzeugs (4; 104) in Längsrichtung des Schlitzhohlleiters (1; 101) bewegt wird, **dadurch gekennzeichnet, dass** zwischen die Antenne (3; 103A, 103B) des Fahrzeugs (4; 104) und eine Sende- und Empfangseinrichtung (10; 110) des Fahrzeugs (4; 104) eine Dämpfungseinheit (11; 111A, 111B) mit einstellbarer Dämpfung geschaltet ist, und dass in der Dämpfungseinheit (11; 111A, 111B) eine Schalteinrichtung (17, 18; 20, 21, 22, 23) vorgesehen ist, mittels derer die Antenne (3; 103A, 103B) des Fahrzeugs (4; 104) wahlweise direkt oder über mindestens ein zwischengeschaltetes Dämpfungsglied (14, 15; 24, 25) mit der Sende- und Empfangseinrichtung (10; 110) des Fahrzeugs (4; 104) verbindbar ist.

2. Kommunikationssystem nach Anspruch 1, **dadurch gekennzeichnet, dass** die Dämpfungseinheit (11; 111A, 111B) eine analoge oder digitale Schnittstelle (19; 28; 30) aufweist, über welche ihre Dämpfung mittels eines ihr an der Schnittstelle (19; 28; 30) zugeführten Steuersignals einstellbar ist.

3. Kommunikationssystem nach Anspruch 1 oder 2, **dadurch gekennzeichnet, dass** die Dämpfungseinheit (11; 111A, 111B) mit einem Dämpfungsregler (13; 113) verbunden ist, welchem von der Sende- und Empfangseinrichtung (10; 110) des Fahrzeugs (4; 104) ein die Leistung des empfangenen Signals anzeigendes Signal zuführbar ist, und dass der Dämpfungsregler (13; 113) dazu eingerichtet ist, die Dämpfung der Dämpfungseinheit (11; 111A, 111B) in Abhängigkeit von der Leistung des empfangenen Signals einzustellen.

4. Kommunikationssystem nach einem der Ansprüche 1 bis 3, **dadurch gekennzeichnet, dass** die Dämpfungseinheit (11; 111A, 111B) mit einem Dämpfungsregler (13; 113) verbunden ist, welchem von einer Steuereinrichtung (9; 109) des Fahrzeugs (4; 104) ein die Position des Fahrzeugs (4; 104) anzeigendes Signal zuführbar ist, und dass der Dämpfungsregler (13; 113) dazu eingerichtet ist, die Dämpfung der Dämpfungseinheit (11; 111A, 111B) in Abhängigkeit von der Position des Fahrzeugs (4; 104) einzustellen.

5. Kommunikationssystem nach einem der Ansprüche 1 bis 4, **dadurch gekennzeichnet, dass** die Schalteinrichtung (17, 18; 20, 21, 22, 23) über eine Schnittstelle (19; 28) der Dämpfungseinheit (11; 111A, 111B) durch einen Dämpfungsregler (13; 113) des Fahrzeugs (4; 104) betätigbar ist.

6. Kommunikationssystem nach einem der Ansprüche 1 bis 5, **dadurch gekennzeichnet, dass** mindestens zwei Dämpfungsglieder (14, 15) unterschiedlicher Dämpfung vorgesehen sind, und dass die Antenne (3; 103A, 103B) durch die Schalteinrichtung (17, 18) des Fahrzeugs (4; 104) wahlweise direkt oder über eines der Dämpfungsglieder (14, 15) mit der Sende- und Empfangseinrichtung (10; 110) des Fahrzeugs (4; 104) verbindbar ist.

7. Kommunikationssystem nach einem der Ansprüche 1 bis 5, **dadurch gekennzeichnet, dass** mindestens zwei Dämpfungsglieder (24, 25) vorgesehen sind, und dass die Antenne (3; 103A, 103B) durch die Schalteinrichtung (20, 21, 22, 23) wahlweise direkt oder über eines der Dämpfungsglieder (24, 25) oder über eine Reihenschaltung mehrerer Dämpfungsglieder (24, 25) mit der Sendeund Empfangseinrichtung (10; 110) des Fahrzeugs (4; 104) verbindbar ist.

8. Kommunikationssystem nach einem der Ansprüche 1 bis 7, **dadurch gekennzeichnet, dass** an dem Fahrzeug (104) zwei Antennen (103A, 103B) in Fahrtrichtung hintereinander in einem vorbestimmten Abstand zueinander angeordnet sind, dass die Sende- und Empfangseinrichtung (110) des Fahrzeugs (104) zwei Anschlüsse für Antennen (103A, 103B) aufweist, und dass zwischen jede Antenne (103A, 103B) des Fahrzeugs (104) und die Sende- und Empfangseinrichtung (110) des Fahrzeugs (104) jeweils eine Dämpfungseinheit (111A, 111B) mit einstellbarer Dämpfung geschaltet ist.

9. Kommunikationssystem nach Anspruch 8, **dadurch gekennzeichnet, dass** die Dämpfungseinheiten (111A, 111B) mit einem Dämpfungsregler (113) mit mehreren Ausgängen verbunden sind, durch welchen ihre Dämpfungen unabhängig voneinander einstellbar sind.

10. Kommunikationssystem nach Anspruch 9, **dadurch gekennzeichnet, dass** dem Dämpfungsregler (13; 113) von der Sende- und Empfangseinrichtung (110) des Fahrzeugs (104) ein die Leistung der empfangenen Signale anzeigendes Signal zuführbar ist, und dass der Dämpfungsregler (113) dazu eingerichtet ist, die Dämpfungen der Dämpfungseinheiten (111A, 111B) in Abhängigkeit von der Leistung der empfangenen Signale einzustellen.

11. Kommunikationssystem nach Anspruch 9 oder 10, **dadurch gekennzeichnet, dass** dem Dämpfungsregler (113) von einer Steuereinrichtung (109) des Fahrzeugs (104) ein die Position des Fahrzeugs (104) anzeigendes Signal zuführbar ist, und dass der Dämpfungsregler (113) dazu eingerichtet ist, die Dämpfungen der Dämpfungseinheiten (111A, 111B) in Abhängigkeit von der Position des Fahrzeugs (104) einzustellen.

## Claims

1. Communication system for communication between a vehicle (4; 104) travelling along a predetermined path and a fixed station (5; 105), using a slotted waveguide (1; 101) extending parallel to the path of the vehicle (4; 104), in which at least one antenna (6; 106A, 106B) connected to a transmitting and receiving device (7; 107A, 107B) of the fixed station (5; 105) and at least one antenna (3; 103A, 103B) of the vehicle (4; 104), wherein the antenna (3; 103A, 103B) of the vehicle (4; 104) is moved in the longitudinal direction of the slotted waveguide (1; 101) as the vehicle (4; 104) moves, **characterised in that** between the antenna (3; 103A, 103B) of the vehicle (4; 104) and a transmitting and receiving device (10; 110) of the vehicle (4; 104) an attenuation unit (11; 111A, 111B) with adjustable attenuation is connected, and the attenuation unit (11; 111A, 111B) comprises switching means (17, 18; 20, 21, 22, 23) with which the vehicle's (4; 104) antenna (3; 103A, 103B) can be selectively connected either directly or via at least one intermediate attenuator (14, 15; 24, 25) to the transmitting and receiving device (10; 110) of the vehicle (4; 104).

2. Communication system according to claim 1, **characterised in that** the attenuation unit (11; 111A, 111B) comprises an analogue or digital interface (19; 28; 30) via which its attenuation can be adjusted by means of a control signal supplied to it at the interface (19; 28; 30).

3. Communication system according to claim 1 or 2, **characterised in that** the attenuation unit (11; 111A, 111B) is connected to an attenuation controller (13; 113), to which a signal indicating the power of the received signal can be supplied by the transmitting and receiving device (10; 110) of the vehicle (4; 104), and **in that** the attenuation controller (13; 113) is arranged to adjust the attenuation of the attenuation unit (11; 111A, 111B) as a function of the power of the received signal.

4. Communication system according to any one of claims 1 to 3, **characterised in that** the attenuation unit (11; 111A, 111B) is connected to an attenuation controller (13; 113), to which a signal indicating the position of the vehicle (4; 104) can be supplied by a control unit (9; 109) of the vehicle (4; 104), and **in that** the attenuation controller (13; 113) is arranged to adjust the attenuation of the attenuation unit (11; 111A, 111B) as a function of the position of the vehicle (4; 104).

5. Communication system according to any one of claims 1 to 4, **characterised in that** the switching device (17, 18; 20, 21, 22, 23) can be actuated via an interface (19; 28) of the attenuation unit (11; 111A, 111B) by an attenuation controller (13; 113) of the vehicle (4; 104).

6. Communication system according to any one of claims 1 to 5, **characterised in that** at least two attenuators (14, 15) with different attenuation levels are provided, and **in that** the antenna (3; 103A, 103B) can be connected by the switching device (17, 18) of the vehicle (4; 104) either directly or via one of the attenuators (14, 15) to the transmitting and receiving device (10; 110) of the vehicle (4; 104).

7. Communication system according to any one of claims 1 to 5, **characterised in that** at least two attenuators (24, 25) are provided, and **in that** the antenna (3; 103A, 103B) can be connected by the switching means (20, 21, 22, 23) to the transmitting and receiving device (10; 110) of the vehicle (4; 104) either directly or via one of the attenuators (24, 25) or via a series connection of several attenuators (24, 25).

8. Communication system according to any one of claims 1 to 7, **characterised in that** two antennas (103A, 103B) are arranged on the vehicle (104) one behind the other in the direction of travel at a predetermined distance from one another, **in that** the transmitting and receiving device (110) of the vehicle (104) has two connections for antennas (103A, 103B), and that an attenuation unit (111A, 111B) with adjustable attenuation is connected between each antenna (103A, 103B) of the vehicle (104) and the transmitting and receiving device (110) of the vehicle (104).

9. Communication system according to claim 8, **characterised in that** the attenuation units (111A, 111B) are connected to an attenuation controller (113) with multiple outputs, by means of which their attenuation levels can be adjusted independently of one another.

10. Communication system according to claim 9, **characterised in that** a signal indicating the power of the received signals can be supplied to the attenuation controller (13; 113) by the transmitting and receiving device (110), and that the attenuation controller (113) is arranged to adjust the attenuation of the attenuation units (111A, 111B) as a function of the power of the received signals.

11. Communication system according to claim 9 or 10, **characterised in that** a signal indicating the position of the vehicle (104) can be supplied to the attenuation controller (113) by a control unit (109) of the vehicle (104), and **in that** the attenuation controller (113) is arranged to adjust the attenuation of the attenuation units (111A, 111B) as a function of the position of the vehicle (104).

## Revendications

1. Système de communication permettant la communication entre un véhicule (4 ; 104) guidé le long d'une trajectoire de déplacement prédéterminée et une station fixe (5 ; 105) à l'aide d'un guide d'ondes à fente (1 ; 101) s'étendant parallèlement à la trajectoire de déplacement du véhicule (4 ; 104), guide d'ondes à fente dans lequel pénètrent au moins une antenne (6 ; 106A, 106B) connectée à un dispositif d'émission et de réception (7 ; 107A, 107B) de la station fixe (5 ; 105) et au moins une antenne (3 ; 103A, 103B) du véhicule (4 ; 104), dans lequel l'antenne (3 ; 103A, 103B) du véhicule (4 ; 104) est déplacée dans la direction longitudinale du guide d'ondes à fente (1 ; 101) lors d'un déplacement du véhicule (4 ; 104), **caractérisé en ce qu'**une unité d'atténuation (11 ; 111A, 111B) à atténuation réglable est intercalée entre l'antenne (3 ; 103A, 103B) du véhicule (4 ; 104) et un dispositif d'émission et de réception (10 ; 110) du véhicule (4 ; 104), **et en ce qu'**un dispositif de commutation (17, 18 ; 20, 21, 22, 23) est prévu dans l'unité d'atténuation (11 ; 111A, 111B), dispositif de commutation au moyen duquel l'antenne (3 ; 103A, 103B) du véhicule (4 ; 104) peut être connectée, au choix directement ou par l'intermédiaire d'au moins un élément d'atténuation (14, 15 ; 24, 25) intercalé, au dispositif d'émission et de réception (10 ; 110) du véhicule (4 ; 104).

2. Système de communication selon la revendication 1, **caractérisé en ce que** l'unité d'atténuation (11 ; 111A, 111B) présente une interface (19 ; 28 ; 30) analogique ou numérique par l'intermédiaire de laquelle son atténuation peut être réglée au moyen d'un signal de commande qui lui est transmis au niveau de l'interface (19 ; 28 ; 30).

3. Système de communication selon la revendication 1 ou 2,
**caractérisé en ce que** l'unité d'atténuation (11 ; 111A, 111B) est connectée à un régulateur d'atténuation (13 ; 113) auquel un signal indiquant la puissance du signal reçu peut être transmis par le dispositif d'émission et de réception (10 ; 110) du véhicule (4 ; 104), **et en ce que** le régulateur d'atténuation (13 ; 113) est configuré pour régler l'atténuation de l'unité d'atténuation (11 ; 111A, 111B) en fonction de la puissance du signal reçu.

4. Système de communication selon l'une des revendications 1 à 3,
**caractérisé en ce que** l'unité d'atténuation (11 ; 111A, 111B) est connectée à un régulateur d'atténuation (13 ; 113) auquel un signal indiquant la position du véhicule (4 ; 104) peut être transféré par un dispositif de commande (9 ; 109) du véhicule (4 ; 104), **et en ce que** le régulateur d'atténuation (13 ; 113) est configuré pour régler l'atténuation de l'unité d'atténuation (11 ; 111A, 111B) en fonction de la position du véhicule (4 ; 104).

5. Système de communication selon l'une des revendications 1 à 4, **caractérisé en ce que** le dispositif de commutation (17, 18 ; 20, 21, 22, 23) peut être actionné, par l'intermédiaire d'une interface (19 ; 28) de l'unité d'atténuation (11 ; 111A, 111B), par un régulateur d'atténuation (13 ; 113) du véhicule (4 ; 104).

6. Système de communication selon l'une des revendications 1 à 5, **caractérisé en ce qu'**au moins deux éléments d'atténuation (14, 15) à atténuations différentes sont prévus, **et en ce que** l'antenne (3 ; 103A, 103B) peut être connectée, par le dispositif de commutation (17, 18) du véhicule (4 ; 104), au choix directement ou par l'intermédiaire de l'un des éléments d'atténuation (14, 15), au dispositif d'émission et de réception (10 ; 110) du véhicule (4 ; 104).

7. Système de communication selon l'une des revendications 1 à 5, **caractérisé en ce qu'**au moins deux éléments d'atténuation (24, 25) sont prévus, **et en ce que** l'antenne (3 ; 103A, 103B) peut être connectée, par le dispositif de commutation (20, 21, 22, 23), au choix directement ou par l'intermédiaire de l'un des éléments d'atténuation (24, 25) ou par l'intermédiaire d'un montage en série de plusieurs éléments d'atténuation (24, 25), au dispositif d'émission et de réception (10 ; 110) du véhicule (4 ; 104).

8. Système de communication selon l'une des revendications 1 à 7, **caractérisé en ce que** deux antennes (103A, 103B) sont disposées l'une derrière l'autre dans le sens de la marche, à une distance prédéterminée l'une de l'autre, au niveau du véhicule (104), **en ce que** le dispositif d'émission et de réception (110) du véhicule (104) présente deux connecteurs pour antennes (103A, 103B), **et en ce que** respectivement une unité d'atténuation (111A, 111B) à atténuation réglable est intercalée entre chaque antenne (103A, 103B) du véhicule (104) et le dispositif d'émission et de réception (110) du véhicule (104).

9. Système de communication selon la revendication 8, **caractérisé en ce que** les unités d'atténuation (111A, 111B) sont connectées à un régulateur d'atténuation (113) à plusieurs sorties au moyen duquel leurs atténuations peuvent être réglées indépendamment les unes des autres.

10. Système de communication selon la revendication 9,
**caractérisé en ce qu'**un signal indiquant la puissance des signaux reçus peut être transmis au régulateur d'atténuation (13 ; 113) par le dispositif d'émission et de réception (110) du véhicule (104), **et en ce que** le régulateur d'atténuation (113) est configuré pour régler les atténuations des unités d'atténuation (111A, 111B) en fonction de la puissance des signaux reçus.

11. Système de communication selon la revendication 9 ou 10,
**caractérisé en ce qu'**un signal indiquant la position du véhicule (104) peut être transmis au régulateur d'atténuation (113) par un dispositif de commande (109) du véhicule (104), **et en ce que** le régulateur d'atténuation (113) est configuré pour régler les atténuations des unités d'atténuation (111A, 111B) en fonction de la position du véhicule (104).
